# FASCICULE DE BREVET EUROPEEN

(11) **EP 0 974 420 B1**
(45) Date de publication et mention de la délivrance du brevet: **18.09.2002**
(21) Numéro de dépôt: 99202207.9
(22) Date de dépôt: 06.07.1999
(51) Int. Cl.: B23Q 3/157

(54) **Dispositif d'emmagasinage et de changement d'outils d'une machine-outil d'usinage et procédé de travail d'un tel dispositif**
Vorrichtung zum Speichern und Wechseln von Werkzeugen einer Werkzeugmaschine und Arbeitsverfahren einer solchen Vorrichtung
Storage device and tool changer for machine tools and working method for such a device

(30) Priorité: 09.07.1998 FR 9808794
(43) Date de publication de la demande: 26.01.2000
(73) Titulaire: Renault Automation Comau, 92365 Meudon La Forêt Cedex (FR)
(72) Inventeur: Laur, Raymond, 81290 Viviers les Montagnes (FR); Sudre, Gilles, 81100 Castres (FR)
(74) Mandataire: Richebourg, Michel François

(56) Documents cités:
- EP-A- 0 522 498
- JP-A- 60 016 332
- US-A- 4 833 770

## Description

La présente invention a trait au domaine de l'usinage et notamment aux adaptations permettant d'assurer le changement d'outils d'une machine-outil d'usinage dans des conditions optimales.

Les machines-outils qui assurent aujourd'hui les usinages à très grande vitesse, diminuent les durées des temps de courses, d'usinage et donc d'utilisation d'un outil. L'usinage à très grande vitesse définit donc des critères nouveaux ou du moins des critères plus contraignants dans les temps d'échange d'outils, de chargement ou de déchargement sur la ou les broches, ainsi que de chargement ou de déchargement dans le magasin d'outils.

En effet, le dispositif de changement d'outils d'une machine-outil d'usinage à grande vitesse doit pouvoir assurer dans des conditions de temps optimales, les opérations suivantes :
- le déchargement de la broche de l'outil venant d'être utilisé,
- son stockage dans un dispositif d'emmagasinage,
- la prise du bon outil dans un dispositif d'emmagasinage,
- le chargement de cet outil sur la broche.

Un autre critère venant s'ajouter au critère de rapidité est la quantité d'outils proposée par ledit dispositif d'emmagasinage. Il est classique d'utiliser un dispositif d'emmagasinage rotatif afin de proposer le plus rapidement possible au dispositif assurant la prise de l'outil, un logement vide pour loger l'outil venant d'être utilisé, et ensuite par rotation du dispositif, de proposer l'outil à utiliser dans la phase d'usinage suivante.

Un tel dispositif dit à barillet, bien que répondant parfaitement aux besoins de la machine-outil utilisant un nombre limité d'outils, est inadapté dans le cas où les phases d'usinage de la pièce devant être réalisée par la machine-outil, nécessitent l'utilisation d'un grand nombre d'outils.

Il est néanmoins possible de rendre accessible un plus grand nombre d'outils en doublant les dispositifs à barillet ce qui impose deux dispositifs de changement d'outils ou du moins un double encombrement.

Parmi les dispositifs à barillet, il est connu dans l'art antérieur le dispositif d'emmagasinage rotatif décrit dans le brevet français n° 2 748 225 qui comporte une pluralité d'outils déposée sur sa périphérie. Lors du changement d'outil, le barillet entre par rotation dans la zone d'usinage, un coulant porte électro-broche mobile sur trois axes dépose l'outil venant d'être utilisé dans la phase d'usinage précédente dans un logement vide du barillet et prend, après rotation adéquate du barillet, l'outil devant être utilisé dans la phase d'usinage suivante.

Les limitations d'un dispositif à barillet sont les suivantes :
- le nombre d'outils est très limité,
- les mouvements en rotation d'un barillet supportant un grand nombre d'outils devraient être assurés par une motorisation sur-dimensionnée,
- la barillet devrait être d'un très grand diamètre,
- le doublement des barillets ne suffit pas pour fournir suffisamment d'outils pour certaines applications,
- le chargement et le déchargement des outils pendant l'opération d'usinage n'est pas possible,
- le coulant attend la rotation du barillet avant de pouvoir prendre l'outil devant être utilisé dans le prochain usinage.

Il existe également dans l'art antérieur, un dispositif dans lequel les logements des outils sont solidaires les uns des autres ainsi que d'un moyen d'entraînement, constituant ainsi une chaîne qui se meut pour présenter, au niveau de la zone d'échange entre le dispositif d'emmagasinage et le poste d'usinage, soit le logement vide pour récupérer l'outil venant d'être utilisé, soit un logement occupé par l'outil devant être utilisé dans la prochaine phase d'usinage. Il est évident que le nombre d'outils peut être très important pour un tel dispositif d'emmagasinage. Néanmoins, ce même nombre d'outils détermine également la vitesse pour passer d'un logement d'outils à un autre. En conséquence, plus les outils sont nombreux, plus la vitesse pour assurer le stockage de l'outil venant d'être utilisé et mettre à disposition l'outil devant être utilisé, est lente.

Les recherches de la demanderesse se sont donc orientées vers un dispositif d'emmagasinage et de changement d'outils de grande capacité respectant les critères de rapidité définis par l'usinage à très grande vitesse.

Augmenter le nombre d'outils a néanmoins pour inconvénient, dans l'optique d'un dispositif classique de changement d'outils classique, d'allonger les temps nécessaires pour décharger l'outil ainsi que pour l'amener vers la zone d'échange entre le dispositif d'emmagasinage et de changement d'outils et la broche, du fait même de l'augmentation en longueur des courses. Ainsi, par exemple, le brevet européen n° 0522498 décrit un magasin à outils comprenant une unité de changement d'outils qui adopte des aménagements lui permettant d'accueillir un nombre maximal d'outils. Néanmoins, la présence d'une seule unité mobile assurant non seulement le transport de l'outil de la zone de stockage vers la zone d'usinage et l'échange des outils constitue un inconvénient majeur à la réalisation rapide de l'opération de changement d'outils. L'augmentation du nombre d'outils ne fait qu'augmenter ce ralentissement.

La demanderesse a donc mené des recherches sur la base d'un dispositif d'emmagasinage et de changement d'outils d'une machine-outil d'usinage à grande vitesse comportant un coulant horizontal recevant à son extrémité un outil, du type de celui se composant d'un module de stockage d'outils comportant, à l'intérieur d'une enceinte fermée, une pluralité de logements alignés réceptionnant les outils de façon à ce que les axes de ces derniers soient parallèles à l'axe du coulant et soient éléments d'un même plan vertical de stockage comme par exemple celui décrit dans le document européen n° 0522498, afin de limiter également la durée des opérations précitées. Ces recherches ont abouti à la conception originale d'un dispositif d'emmagasinage et de changement d'outils de grande capacité particulièrement nouveau et inventif obviant aux inconvénients précités et proposant des fonctions optimisées de stockage et de changement d'outils.

Selon la caractéristique principale, le dispositif d'emmagasinage et de changement d'outils d'une machine-outil d'usinage à grande vitesse est remarquable en ce qu'il se compose en outre des parties suivantes :
- un module de manipulation pourvu de deux organes préhenseurs qui, se déplaçant dans un plan vertical parallèle au plan vertical de stockage des outils, assure le chargement ou le déchargement d'au moins un outil dans un logement et son transport dans la susdite enceinte, selon une direction parallèle à l'axe du coulant, de son logement vers une zone d'échange avec un troisième module et vice-versa, et
- un module de transfert pourvu de deux moyens de préhension qui assure le transport de l'outil présent dans le coulant d'une zone d'échange avec le coulant vers la zone d'échange avec le module de manipulation pour le lui transmettre et vice-versa, les deux moyens de préhension du module de transfert venant en vis-à-vis avec les organes préhenseurs du module de manipulation dans la zone d'échange.

Cette caractéristique est particulièrement avantageuse en ce qu'elle ajoute un module intermédiaire dans le déplacement de l'outil de sa zone de stockage vers sa zone d'utilisation. En effet, ce n'est pas le module de transfert qui assure le chargement ou le déchargement de l'outil dans le module de stockage, mais le module de manipulation. Inversement, ce n'est pas le module de manipulation qui assure le passage de l'outil de la zone de stockage vers le coulant, mais le module de transfert.

Aussi, par le rajout d'un élément intermédiaire, il est parfaitement possible de réaliser la plupart des opérations classiques d'un dispositif d'emmagasinage et de changement d'outils en temps caché.

Ainsi, par exemple, le module de transfert des outils assure l'enlèvement de l'outil porté par le coulant et son remplacement pour un autre outil pendant que le module de manipulation dépose un autre outil dans le magasin de stockage. Ou bien, toujours lorsque le module de transfert assure le remplacement d'un outil, le module de manipulation peut aller chercher un nouvel outil dans le magasin.

L'ajout d'un module intermédiaire permet donc de ne pas arrêter l'usinage lorsque le module de manipulation décharge un outil venant d'être utilisé et/ou va chercher un nouvel outil. En conséquence, la taille, le volume ou la capacité en outils du module de stockage des outils imaginé par la demanderesse, n'influent pas sur la rapidité de changement d'outils du dispositif de l'invention, puisque les courses de déchargement, de chargement et de transport de la zone d'échange entre le module de transfert et le module de manipulation vers le module de stockage des outils et vice-versa, sont assumées par un module indépendant de celui assurant le transfert.

Cette disposition se démarque des dispositifs de l'art antérieur qui, comme pour un barillet, obligent à arrêter l'usinage lorsque le dispositif d'emmagasinage d'outils est en rotation pour présenter un logement permettant la dépose de l'outil venant d'être utilisé et un autre logement occupé par l'outil devant être utilisé dans la nouvelle phase d'usinage.

Contrairement aux dispositifs d'emmagasinage de l'art antérieur qui tendaient à regrouper toutes les fonctions dans un seul et même dispositif, ce nouveau concept de dispositif d'emmagasinage et de changement d'outils est particulièrement inventif en ce qu'il sépare les fonctions principales de tels dispositifs en trois modules afin que ces derniers puissent fonctionner indépendamment l'un de l'autre.

En outre, la disposition parallèle des axes des outils par rapport à l'axe du coulant, (les outils étant orientés dans le sens d'usinage) garantit un minimum de mouvements annexes dans le transport et le changement des outils. Cette disposition est particulièrement avantageuse en ce que le changement d'orientation d'un outil à des fins de transport peut requérir des accélérations importantes. En conséquence, le changement d'orientation des outils, comme par exemple passer d'une position perpendiculaire à l'axe du coulant porte-outil à une position parallèle, peut entraîner un changement dans les efforts nécessaires à la préhension et donc nécessiter des moyens de préhension et de déplacement des outils sur-dimensionnés.

La disposition des outils selon laquelle leurs axes sont tous parallèles et inclus dans un même plan vertical parallèle à l'axe du coulant, a pour avantage, en dehors du fait d'éviter des mouvements annexes dans le déplacement, d'offrir un encombrement minimum en largeur de l'ensemble machine-outil - magasin d'outils.

En complément de l'ajout d'un intermédiaire dans la chaîne de transport et d'échange des outils de la machine-outil, du coulant vers le magasin d'outils et vice-versa, la demanderesse a conçu judicieusement ledit module de manipulation avec deux bras qui, munis chacun à son extrémité d'un organe préhenseur des outils, sont disposés l'un au-dessus de l'autre dans un même plan vertical perpendiculaire au susdit plan vertical de stockage des outils. Ces bras adoptent deux positions, à savoir :
- une première position déployée de chargement ou de déchargement d'outils où l'organe préhenseur devient coaxial avec l'axe d'un berceau,
- une deuxième position repliée de transport d'outils où l'organe préhenseur s'écarte du plan vertical de stockage.

Cette disposition permet de déplacer deux outils à la fois ou du moins de garder un organe préhenseur libre pour la prise d'un outil présenté par le module de transfert.

En association avec le doublement des organes préhenseurs du module de manipulation, la demanderesse a conçu un module de transfert avec deux moyens de préhension. Cette disposition avec deux moyens de préhension du module de transfert a non seulement l'avantage de pouvoir, sur une même action du module de transfert venant dans sa zone d'échange avec le coulant, assurer la prise de l'outil venant d'être utilisé et présenter au moyen du deuxième moyen de préhension l'outil devant être utilisé dans la phase d'usinage suivante, mais permet également de limiter la durée des échanges d'outils entre les deux modules de transfert et de manipulation.

La limitation des durées d'échange entre les différents modules réduit le nombre d'opérations malgré l'ajout d'un élément intermédiaire. Aussi, le dispositif d'emmagasinage de l'invention qui comporte trois modules, à savoir,
- un module d'emmagasinage,
- un module de manipulation et,
- un module de transfert d'outils,
lesdits modules de manipulation et de transfert étant pourvus chacun de deux moyens de préhension, est remarquable en ce qu'il répond aussi bien aux critères de capacités en nombre d'outils mais aussi en rapidité de chargement et de déchargement d'outils.

Ce dispositif qui répond de façon optimale à des critères nouveaux fixés par l'usinage à grande vitesse, entraîne, du fait même de sa conception nouvelle et inventive, un procédé de travail particulièrement nouveau et inventif dont les différentes étapes seront décrites dans la description qui suit.

En effet, les concepts fondamentaux de l'invention venant d'être exposés ci-dessus dans leur forme la plus élémentaire, d'autres détails et d'autres caractéristiques ressortiront plus clairement à la lecture de la description qui suit, donnant, à titre d'exemple non limitatif et en regard des dessins annexés, un mode de réalisation d'un dispositif d'emmagasinage et de changement d'outil conforme à l'invention. Cette description se réfère aux dessins annexés sur lesquels :
La figure 1 est une vue schématique d'ensemble d'un dispositif d'emmagasinage et de changement d'outil conforme à l'invention accolé sur son côté droit au bâti d'une machine-outil d'usinage à grande vitesse .
Les figures 2a, 2b, 2c, 2d, 2e, 2f, 2g, sont des vues schématiques frontales de l'ensemble machine-outil d'usinage-dispositif d'emmagasinage avec le dispositif d'emmagasinage accolé sur son côté gauche au bâti d'une machine-outil, qui illustrent les mouvements et opérations d'échange et de transfert des outils entre les différents modules du dispositif conforme à l'invention.

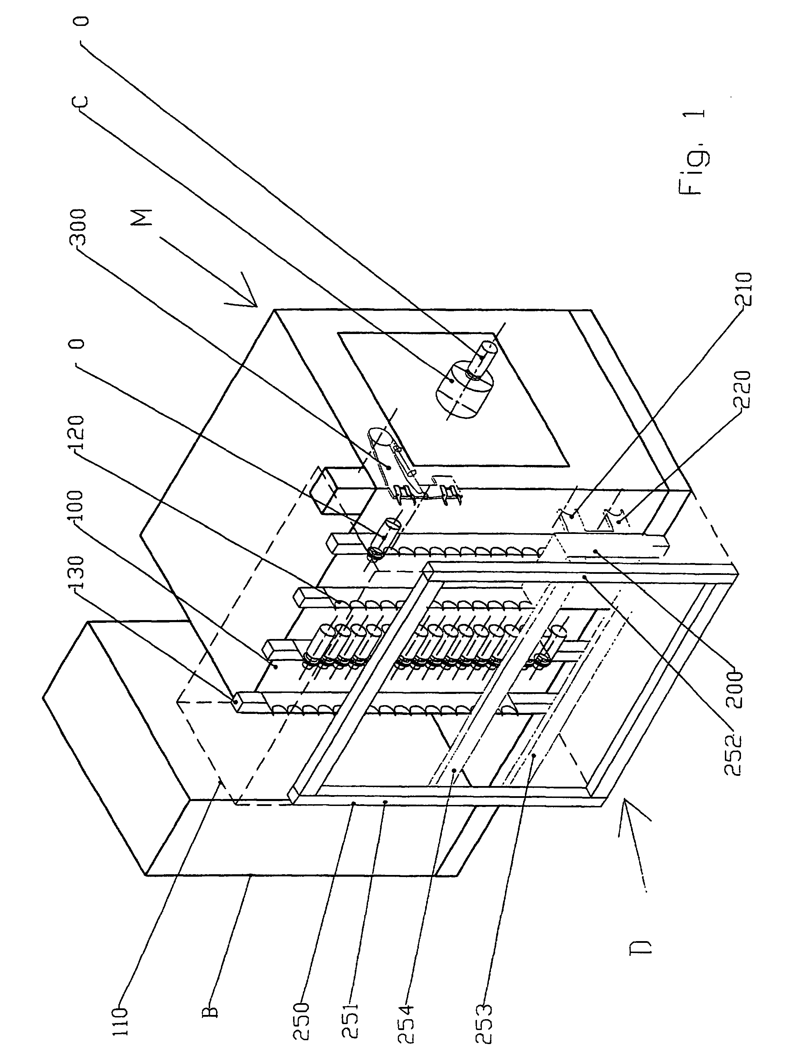

Tel qu'illustré sur le dessin de la figure 1, le dispositif d'emmagasinage et de changement d'outils de l'invention référencé D dans son ensemble d'une machine-outil d'usinage à grande vitesse M comportant un coulant horizontal C recevant à son extrémité un outil O, se compose des parties suivantes :
- un module de stockage d'outils 100 comportant, à l'intérieur d'une enceinte fermée 110 (représentée en traits mixtes), une pluralité de logements alignés 120 réceptionnant les outils O de façon à ce que les axes de ces derniers soient parallèles à l'axe du coulant C et soient éléments d'un même plan vertical de stockage,
- un module de manipulation 200 qui, se déplaçant dans un plan vertical parallèle au plan vertical de stockage des outils O, assure le chargement ou le déchargement d'au moins un outil O dans un logement 120 et son transport dans la susdite enceinte 110, selon une direction parallèle à l'axe du coulant C, de son logement 120 vers une zone d'échange avec un troisième module 300 et vice-versa, et
- un module de transfert 300 qui assure le transport de l'outil O présent dans le coulant C d'une zone d'échange avec le coulant C vers la zone d'échange avec le module de manipulation 200 pour le lui transmettre et vice-versa.

Selon un mode de réalisation préféré, lesdits logements 120 du susdit module de stockage 100 sont constitués chacun par un berceau qui, accessible sur un côté, soutient l'outil O par gravité. L'utilisation de la gravité pour assurer le soutien des outils permet d'éviter tout moyen de préhension dans le module de stockage 100.

En outre, selon le mode préféré mais non limitatif de réalisation illustré, lesdits berceaux 120 sont disposés sur le plan vertical sur lequel ils sont fixés selon un même entraxe en hauteur et un même écartement en longueur. Cette disposition particulière a pour avantage de proposer un module de stockage 100 dédié à cent pour cent aux outils O d'un certain diamètre, tout en permettant le stockage d'outils plus grands en libérant les berceaux 120 adjacents.

Comme illustrés, lorsque la machine-outil d'usinage M comporte un bâti B de forme générale parallélépipèdique, lesdits berceaux 120 sont avantageusement fixés au moyen de leur côté fermé à une face latérale du bâti B de la susdite machine-outil d'usinage M. Cette caractéristique associée à la disposition dans un même plan vertical et parallèlement à l'axe du coulant des axes des outils font que la présence d'un module de stockage 100 de grande capacité ne grève pratiquement pas la largeur de l'ensemble.

Selon une caractéristique particulièrement avantageuse du mode illustré, lesdits berceaux 120 sont ouverts vers le haut et adoptent la forme d'un arc de cercle dont la bissectrice de l'angle formé par les deux extrémités d'arc et le centre du berceau 120 est inclinée selon un angle α par rapport à l'axe horizontal dudit berceau 120. Cette inclinaison a pour objet de faciliter le soutien par gravité des outils présents dans ledit module de stockage. Selon un mode préféré mais non limitatif et tel qu'illustré, l'angle α est égal en valeur absolue à 15°.

Selon le mode de réalisation illustrée, le module de stockage 100 est constitué de quatre montants verticaux 130 sur lesquels sont fixés les côtés fermés des berceaux 120 formant ainsi des rampes verticales de rangement d'outils solidaires d'un côté du bâti de la machine-outil M. Chaque rampe étant indépendante, il est facilement imaginable que de telles rampes puissent être ajoutées, retirées, rapprochées ou éloignées afin de proposer un module de stockage 100 très évolutif.

La demanderesse a en outre imaginé, pour le dispositif d'emmagasinage D de l'invention, une interface avec l'extérieur, c'est à dire la possibilité d'ajouter, de retirer ou d'échanger les outils dans le module de stockage 100. Afin de remplir cette fonction non illustrée, une première solution consiste en ce qu'une partie des berceaux 120 dudit module de stockage 100 est montée mobile et solidaire d'un dispositif d'ouverture de sorte que, mise en mouvement lesdits berceaux mobiles puissent être accessibles de l'extérieur de l'enceinte 110 dudit module de stockage 100 et permettre le chargement ou le déchargement ou bien l'échange des outils O de l'extérieur par un opérateur ou un dispositif automatisé. Ainsi, lorsqu'un outil doit être remplacé, le module de manipulation 200 le prend du logement dans lequel il est stocké et l'amène vers un logement escamotable afin que ce dernier soit retiré de l'enceinte 110 fermée du module de stockage et soit remplacé ou non par un outil nouveau. Selon un mode préféré de réalisation, ces berceaux sont montés sur glissières les guidant dans un mouvement de translation vers l'extérieur tel celui d'un tiroir. Bien entendu, c'est l'indépendance des modules entre eux qui permet le changement des outils ou leur remplacement pendant les opérations d'usinage.

Selon une deuxième solution, une partie des berceaux est escamotable en ce que lesdits berceaux sont solidaires d'un boîtier amovible qui se retire et se replace dans l'enceinte 110 dudit module de stockage 100 afin de permettre le chargement ou le déchargement ou bien l'échange des outils de l'extérieur. Cette solution est particulièrement adaptée pour un changement ou un remplacement des outils O au moyen d'un bras robotisé ou du moins par un dispositif automatisé mais peut très bien être mise en oeuvre pour un opérateur.

Selon une disposition technique particulièrement judicieuse, le fond de l'enceinte 110 du module de stockage est constitué par un dispositif récupérateur de copeaux.

Selon un mode de réalisation préféré, ledit module de manipulation 200 comporte deux bras 210 et 220 qui, munis chacun à son extrémité d'un organe préhenseur 230 et 240 des outils O, sont disposés l'un au-dessus de l'autre dans un même plan vertical perpendiculaire au susdit plan vertical de stockage des outils, lesdits bras 210 et 220 adoptant deux positions, à savoir :
- une première position déployée de chargement ou de déchargement d'outils O où l'organe préhenseur 230 ou 240 devient coaxial avec l'axe d'un berceau 120,
- une deuxième position repliée de transport d'outils O où l'organe préhenseur 230 ou 240 s'écarte du plan vertical de stockage.

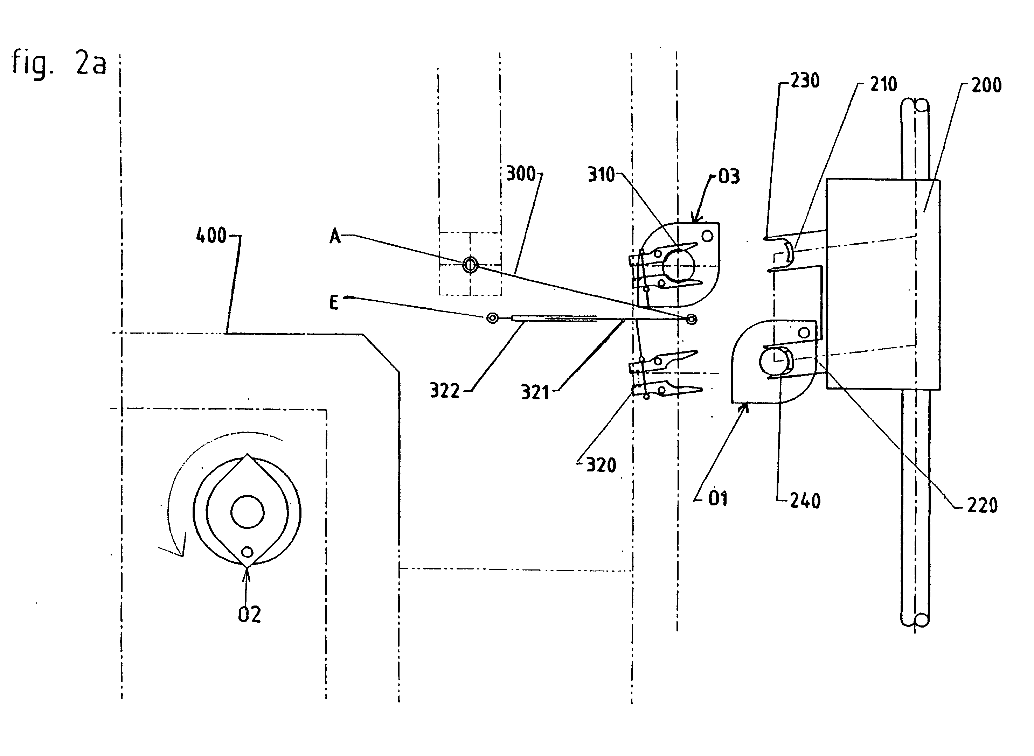

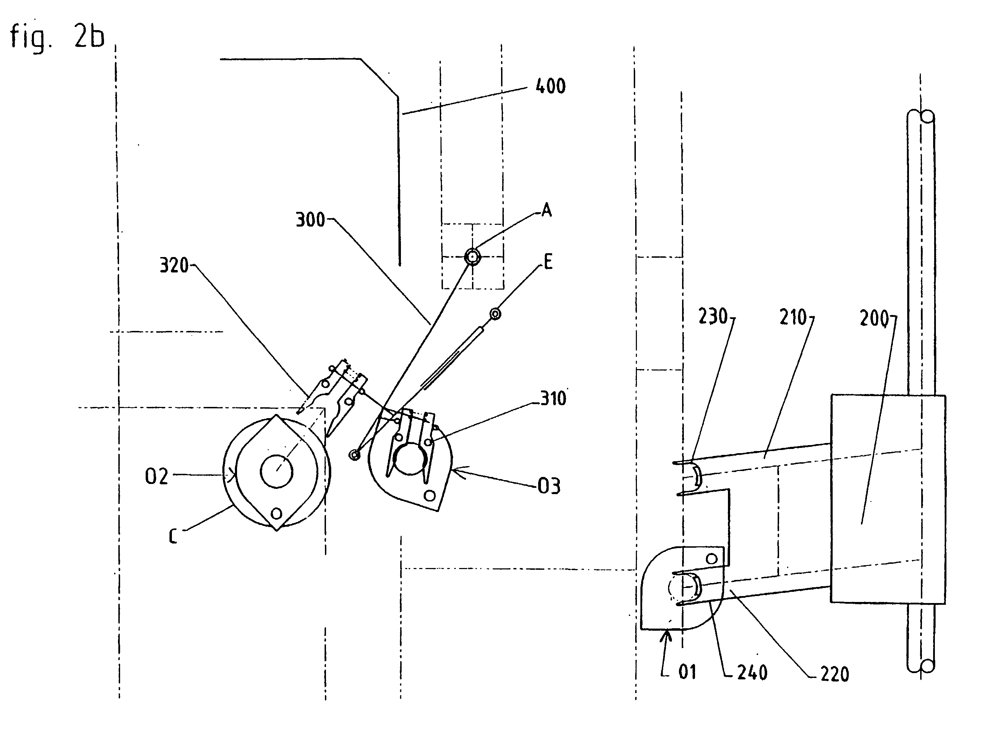

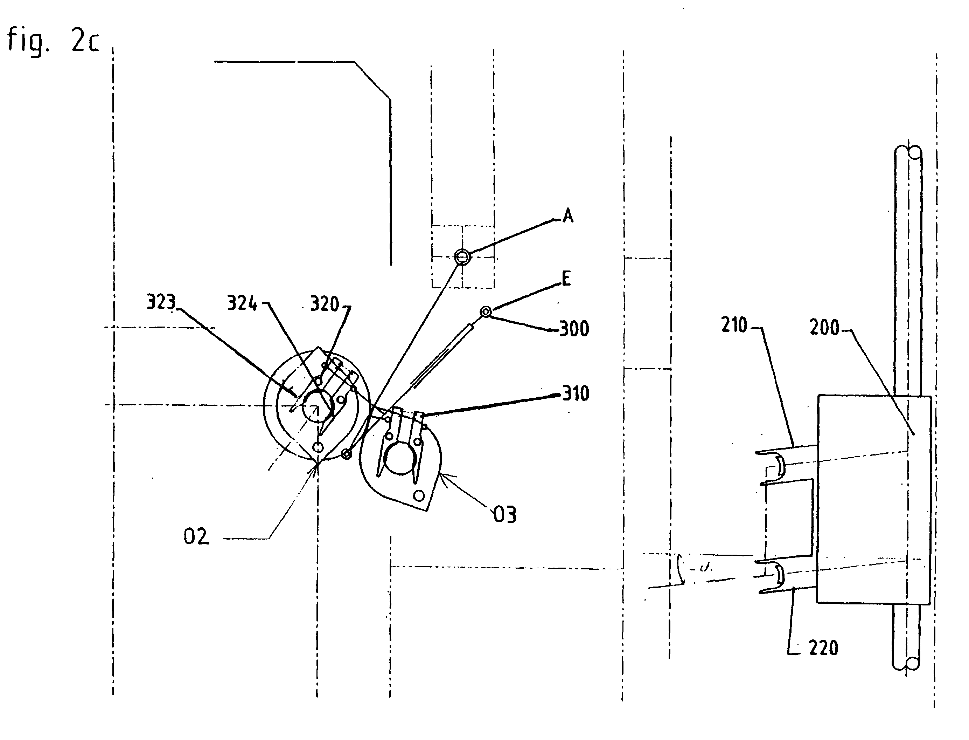

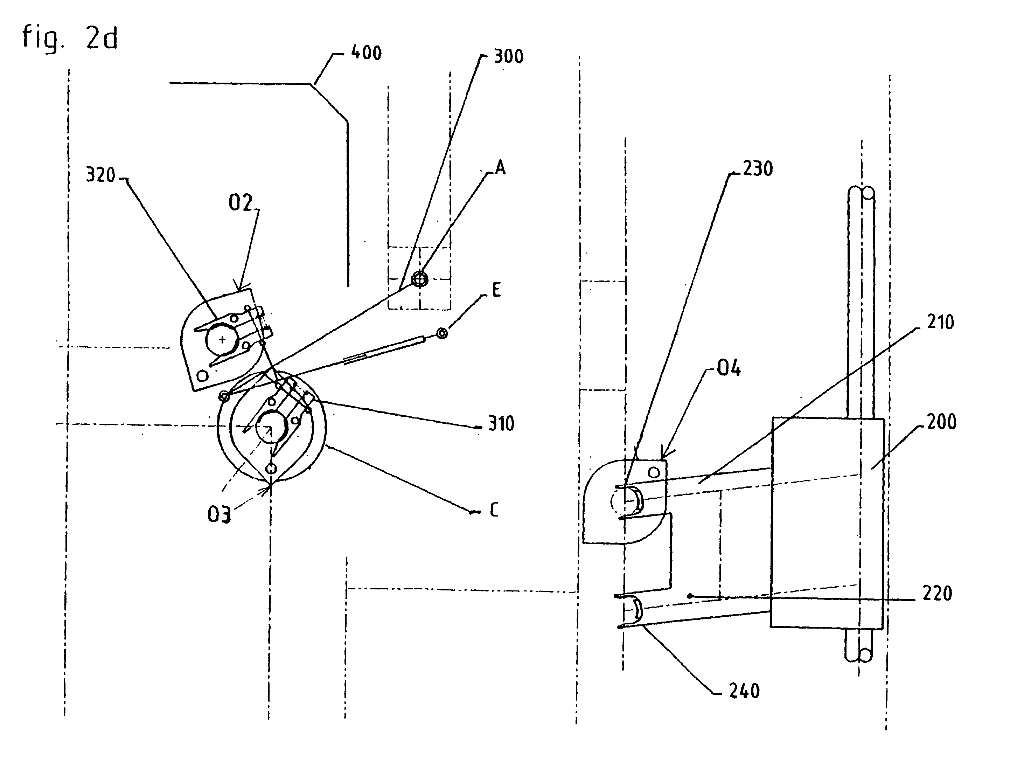

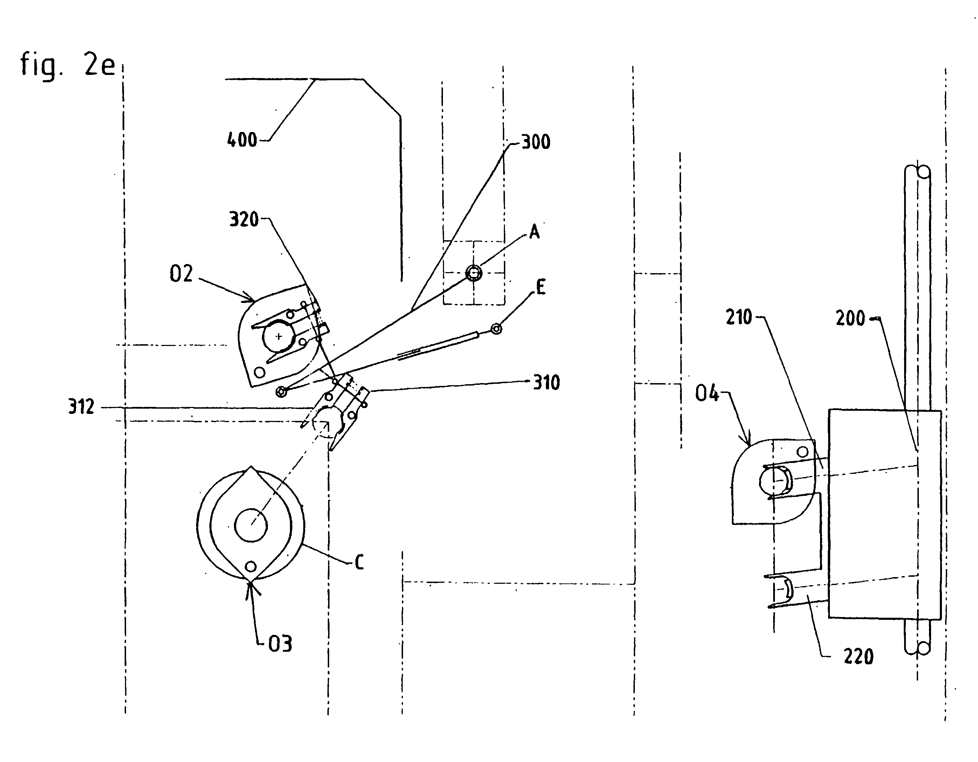

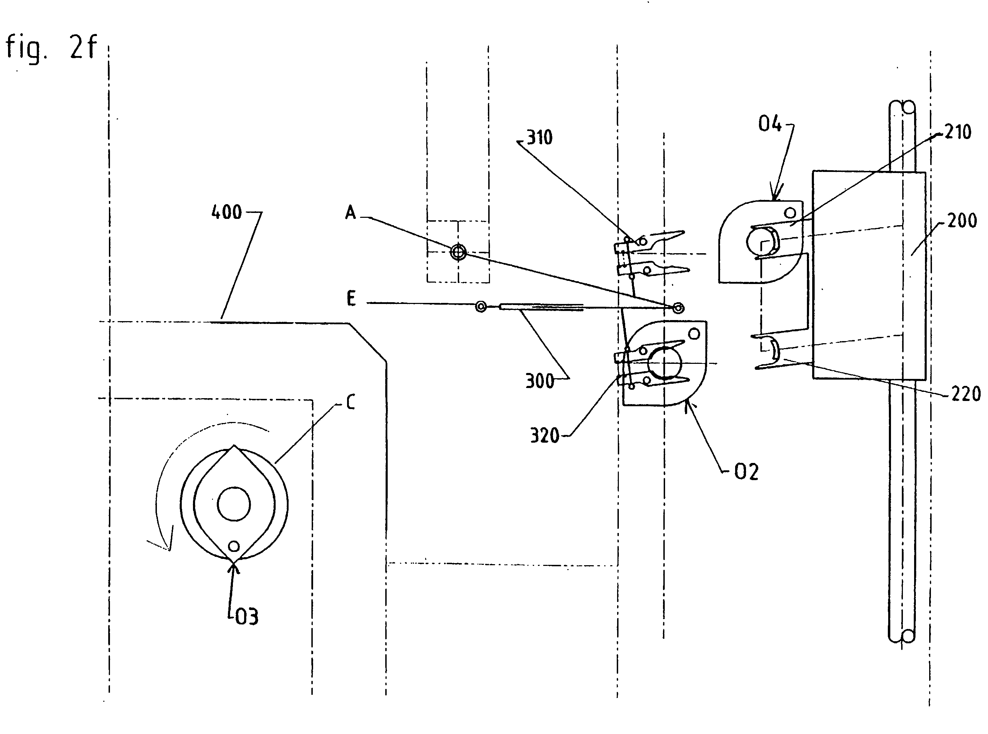

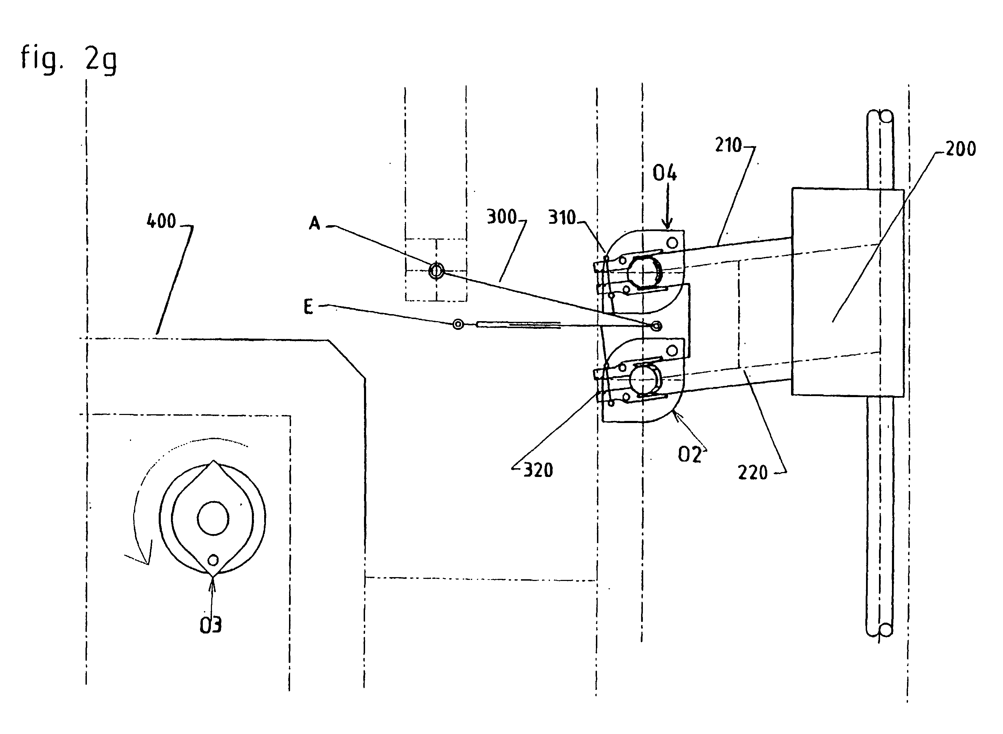

Selon le mode préféré de réalisation illustré plus en détails sur les figures 2, les deux bras 210 et 220 sont mus simultanément par un seul et même actionneur. Le mouvement simultané des deux bras d'une position repliée ou de transport pendant laquelle les organes préhenseurs 230 et 240 sont écartés du plan vertical de stockage à une position déployée dans laquelle les organes préhenseurs 230 et 240 sont positionnés de façon à être coaxiaux aux berceaux 120 et vice-versa par un seul et même actionneur a pour avantage de diminuer le nombre des composants ainsi que de simplifier le fonctionnement d'un tel module de manipulation 200.

En outre, afin de s'adapter à la disposition particulière de l'ouverture des berceaux 120, la course simultanée des deux bras 210 et 220 du susdit module de manipulation 200 est réalisée selon un angle (-α) par rapport à l'horizontale de façon à venir prendre et à déposer de façon optimale les outils O dans les berceaux 120.

Les deux organes préhenseurs 230 et 240 présents à l'extrémité respectivement des bras 210 et 220 sont avantageusement commandés séparément.

Ainsi, bien que la mise en mouvement des bras 210 et 220 soit simultanée, la prise ou la libération des outils par les organes préhenseurs 230 et 240 est commandée indépendamment d'un organe préhenseur à l'autre.

En se reportant sur le dessin de la figure 1, on notera que ledit module de manipulation 200 comporte un sous-ensemble de mise en mouvement assurant ses déplacements rectilignes dans un plan vertical parallèle au plan de stockage des outils, au moyen d'une structure logique verticale 250 comportant des rails verticaux de guidage 251 et 252 et des rails horizontaux 253 et 254 sur lesquels se déplace le module de manipulation 200.

Dans l'éventualité où le cahier des charges d'un dispositif d'emmagasinage et de changement d'outils conforme à l'invention demanderait des mouvements extrêmement rapides pour le module de manipulation 200, la demanderesse a imaginé que ledit module de manipulation 200 puisse être entraîné par des moteurs linéaires.

Une caractéristique particulièrement avantageuse du dispositif de manipulation 200 mais non illustrée est que les susdits organes préhenseurs sont en deux parties :
- une partie de serrage proprement dite constituée d'une pince de serrage venant en prise avec l'outil (O),
- et une partie d'indexage assurant le réajustement du positionnement angulaire de l'outil (O) par rapport à son axe de rotation.

A cette fin, ladite pince de serrage des susdits organes préhenseurs 230 et 240 se compose :
- d'une part, d'une fourchette fixe de positionnement et d'appui de l'outil qui reçoit l'outil O entre ses deux branches et,
- d'autre part, d'un moyen de maintien en position mobile qui vient, pour refermer ladite pince de serrage, appuyer axialement sur l'outil O de façon à maintenir en position ce dernier sur la fourchette fixe de positionnement et d'appui. En conséquence, à la différence des dispositifs de préhension classiques, les organes préhenseurs 230 et 240 de l'invention, adoptent un serrage assurant au moyen d'un appui axial sur les outils O leur maintien en position sur une fourchette fixe d'appui dont les branches accueillent l'outil O mais ne bougent pas pour assurer le serrage.

La partie d'indexage non illustrée, quant à elle, se compose d'une platine qui, venant se positionner à l'extrémité arrière de l'outil O pris dans la pince de serrage de l'organe préhenseur 230 ou 240, comporte des tétons à ressorts s'escamotant sur une partie pleine de l'arrière de l'outil O pris dans ladite pince de serrage et se relevant dans une partie évidée.

Selon un choix de conception particulièrement judicieux, la platine de la partie d'indexage est solidaire du moyen de maintien en position mobile et vient assurer le réajustement de la position angulaire de l'outil O lors du mouvement de fermeture de ladite pince de serrage. Le mouvement du moyen de maintien en position a une double fonction d'indexage et de serrage.

L'indexage angulaire des outils O est particulièrement important. En effet, classiquement l'électro-broche ou du moins le moyen d'entraînement de l'outil O ne peut auto-indexer la position angulaire de l'outil O qu'il va entraîner, mais peut néanmoins s'arrêter toujours dans la même position. Aussi, pour des raisons de prise d'outil O, il est nécessaire que les outils O soient présentés au coulant C selon le même angle.

Dès lors que les berceaux 120 soutiennent par gravité les outils O, il était donc particulièrement important que le module de manipulation 200 indexe angulairement la position de l'outil O lors de sa prise et son transport ainsi que lors de son déchargement. L'escamotage des tétons d'indexage angulaire a pour avantage de ne pas gêner le serrage de l'outil O lorsque ce dernier ne possède pas de partie évidée à son extrémité arrière.

En outre, du fait que la fourchette des organes préhenseurs 230 et 240 reste fixe, le centrage de l'outil O par rapport à l'axe du berceau formé par cette fourchette pourra être judicieusement réalisé au moyen d'un cône de centrage solidaire du susdit moyen de maintien en position venant appuyer sur l'arrière de l'outil O lors de la fermeture de la pince.

Etant donné que le module de manipulation 200 prend, transporte et présente les outils O toujours selon le même angle, le module de transfert 300 doit respecter ce critère en faisant passer les outils O de sa zone d'échange avec le module de manipulation 200 à sa zone d'échange avec le coulant C.

Selon un mode de réalisation préféré, ledit module de transfert 300 comporte deux moyens de préhension 310 et 320 qui, venant en vis-à-vis avec les organes préhenseurs 230 et 240 du susdit module de manipulation 200, dans la zone d'échange avec ce dernier, pour recevoir l'outil O à utiliser et rendre l'outil O venant d'être utilisé, adopte dans la zone d'échange avec le coulant C et dans un plan perpendiculaire à l'axe de rotation des outils O au moins une position de façon à recevoir l'outil O venant d'être utilisé et présenter l'outil O devant être utilisé dans une même position angulaire.

Comme illustré, un premier moyen de préhension 310 du susdit module de transfert 300 adopte une trajectoire de rotation autour d'un premier point fixe A solidaire du bâti B et un deuxième moyen de préhension 320 adopte un mouvement qui, commandé par le mouvement tournant du premier moyen de préhension 310 assure un changement de positionnement angulaire dudit deuxième moyen de préhension 320 par rapport au premier 310.

En effet, pour des raisons d'encombrement dans la zone d'usinage, le coulant C porte-outil de la machine-outil d'usinage M reste fixe dans le plan de mouvements perpendiculaire à l'axe de rotation des outils O pendant le changement d'outil. La position fixe du coulant C lors des phases de changement d'outil exige donc que les deux moyens de préhension 310 et 320 du dispositif de transfert 300 viennent se positionner exactement de la même façon l'une après l'autre dans la zone d'échange avec le coulant C.

De plus, comme illustré sur le dessin de la figure 2b, le mouvement de rotation dudit module de transfert 300 est associé à un mouvement de translation d'un capot de protection 400 séparant la zone d'échange entre le module de manipulation 200 et le module de transfert 300 de la zone d'usinage.

Comme illustré sur le dessin de la figure 2a, ledit deuxième moyen de préhension 320 du module de transfert 300 est solidaire d'une platine 321 montée pivotante par rapport au premier moyen de préhension 310, ladite platine 321 étant en liaison glissière avec un corps de glissière 322 monté en pivot autour d'un deuxième point fixe E du bâti B, l'écartement séparant le susdit premier point fixe A de pivotement avec le susdit deuxième point fixe B de pivotement étant tel que les moyens de préhension 310 et 320 s'orientent angulairement l'un par rapport à l'autre de façon à ce que les deux moyens de préhension 310 et 320 aient toujours la même orientation angulaire en un point commun de leur trajectoire.

Le dispositif conçu par la demanderesse et venant d'être décrit adopte un procédé de travail dont les différentes étapes suit le cycle illustré par l'ensemble des figures 2.

Comme illustré sur le dessin de la figure 2a, le module de manipulation 200 est dans sa position de transport et comporte un premier organe préhenseur 230 libre et un deuxième organe préhenseur 240 avec un premier outil O1,
une opération d'usinage est en cours au moyen d'un deuxième outil O2,
le module de transfert 300 est en vis-à-vis du module de manipulation 200 avec un premier moyen de préhension 310 tenant un troisième outil O3 en vis-à-vis avec le premier organe préhenseur 230 libre du module de manipulation 200 et avec un deuxième moyen de préhension 320 libre en vis-à-vis avec ledit deuxième organe préhenseur 240 tenant le premier outil O1.

Le dessin de la figure 2b illustre une position intermédiaire où le module de manutention 200 s'est éloigné de la zone d'échange avec le module de transfert 300 afin de déposer dans le berceau qui lui est destiné l'outil O1 A cette fin, les deux bras 210 et 220 assurent un mouvement plongeant en translation vers le module de stockage 100, le premier organe préhenseur 230 restant en position ouverte, le deuxième organe préhenseur 240 tenant l'outil 01 s'ouvrant de façon à libérer ledit outil, le capot de protection 400 synchronisé avec le mouvement pendulaire du module de transfert 300 est escamoté, l'usinage est arrêté et le coulant C se dirige vers sa position fixe de changement d'outils au niveau de laquelle s'est mis en position, le moyen de préhension libre 320 du module de transfert 300.

Le dessin de la figure 2c illustre une position intermédiaire, pendant laquelle les deux bras 210 et 220 du module de manipulation 200 sont en position de transport avec leur organe préhenseur respectif 230 et 240 libre, le module de manipulation 200 étant en attente pendant que le coulant C s'est placé dans sa position fixe de transfert de façon à ce que le deuxième outil O2 soit en prise avec le moyen de préhension libre 320 du module de transfert 300 et que par recul du coulant C, ce dernier se désolidarise dudit deuxième outil O2. Le module de transfert 300 est dans la même position que celle illustrée dans la figure 2b, l'axe du coulant C étant aligné avec l'axe du berceau défini par le moyen de préhension libre 320 de façon à ce que les deux branches 323 et 324 de la pince à ressorts constituant le moyen de préhension 320 se referme sur l'outil O2 sur une surface destinée à la préhension des outils O.

La figure 2d illustre une position intermédiaire dans laquelle, le module de manipulation 200 se déplace et déploie ses bras 210 et 220 en commandant à son premier organe préhenseur 230 la prise d'un quatrième outil O4, le deuxième organe préhenseur 240 restant libre, pendant que le module de transfert 300 bascule pour présenter en position fixe de changement d'outil et selon la bonne orientation angulaire le troisième outil O3 de façon à ce que par avancée du coulant C ce dernier se solidarise au troisième outil O3. Le moyen de préhension 310 place le troisième outil O3 coaxial à l'axe du coulant V et suivant la même position angulaire que le deuxième outil 02 lors de son arrêt.

La figure 2e illustre une position intermédiaire dans laquelle, les bras 210 et 220 du module de manipulation 200 reviennent en position de transport de façon à ce que ce dernier amène le quatrième outil O4 du module de stockage 100 vers la zone d'échange du module de manipulation 200 avec le module de transfert 300 pendant que le coulant C dégage le troisième outil O3 en se déplaçant selon un plan perpendiculaire à l'axe de rotation des outils O.

La figure 2f illustre une position dans laquelle, le module de manipulation 200 est en position transport dans sa zone d'échange avec le module transfert 300 avec le quatrième outil O4 dans son premier organe préhenseur 230, pendant que le module de transfert 300 bascule de sa zone d'échange avec le coulant C vers sa zone d'échange avec le module de manipulation 200 avec le deuxième outil O2 dans son second moyen de préhension 320 et de façon à ce que les premier 310 et deuxième 320 moyens de préhension du module de transfert 300 viennent en vis-à-vis avec les premier 230 et deuxième 240 organes préhenseurs du module de manipulation 200, le basculement provoquant la remise en place du capot de protection 400, une opération d'usinage démarrant avec le troisième outil O3.

La figure 2g illustre une situation intermédiaire dans laquelle, le module de manipulation 200 déploie ses bras 210 et 220 de façon à ce que le quatrième outil O4 présent dans le premier organe préhenseur 230 vienne en prise avec le premier moyen de préhension 310 du module de transfert 300 et que le deuxième outil O2 en prise dans le deuxième moyen de préhension 320 vienne dans le deuxième organe préhenseur 240 du module de manipulation 200, ce dernier commande alors l'ouverture du premier organe préhenseur 230 et la fermeture du deuxième organe préhenseur 240 de façon à ce que lors du retour en position transport du module de manipulation 200, le deuxième outil O2 soit présent dans le deuxième organe préhenseur 240 et le quatrième outil O4 soit en prise avec le premier moyen de préhension 310 du module de transfert 300, pendant qu'une opération d'usinage est en cours avec le troisième outil O3 reproduisant la situation de départ illustrée par le dessin de la figure 2a.

On comprend que le dispositif d'emmagasinage et de changement d'outils d'une machine-outil d'usinage et le procédé de travail d'un tel dispositif qui viennent d'être ci-dessus décrits et représentés, l'ont été en vue d'une divulgation plutôt que d'une limitation. Bien entendu, divers aménagements, modifications et améliorations pourront être apportés à l'exemple ci-dessus, sans pour autant sortir du cadre de l'invention.

## Revendications

1. Dispositif d'emmagasinage et de changement d'outils (D) d'une machine-outil d'usinage à grande vitesse (M) comportant un coulant horizontal (C) recevant à son extrémité un outil (O), du type de celui se composant d'un module de stockage d'outils (100) comportant, à l'intérieur d'une enceinte fermée (110), une pluralité de logements alignés (120) réceptionnant les outils (O) de façon à ce que les axes de ces derniers soient parallèles à l'axe du coulant (C) et soient éléments d'un même plan vertical de stockage, **CARACTERISÉ PAR LE FAIT QU'**il se compose en outre des parties suivantes :
- un module de manipulation (200) pourvu de deux organes préhenseurs qui, se déplaçant dans un plan vertical parallèle au plan vertical de stockage des outils (O), assure le chargement ou le déchargement d'au moins un outil (O) dans un logement (120) et son transport dans la susdite enceinte (110). selon une direction parallèle à l'axe du coulant (C), de son logement (120) vers une zone d'échange avec un troisième module (300) et vice-versa, et
- un module de transfert (300) pourvu de deux moyens de préhension qui assure le transport de l'outil (O) présent dans le coulant (C) d'une zone d'échange avec le coulant (C) vers la zone d'échange avec le module de manipulation (200) pour le lui transmettre et vice-versa, les deux moyens de préhension du module de transfert venant en vis-à-vis avec les organes préhenseurs du module de manipulation dans la zone d'échange.

2. Dispositif (D) selon la revendication 1, **CARACTERISE PAR LE FAIT QUE** lesdits logements (120) du susdit module de stockage (100) sont constitués chacun par un berceau qui, accessible sur un côté, soutient l'outil (O) par gravité.

3. Dispositif (D) selon les revendications 1 et 2, dans lequel la machine-outil d'usinage (M) comporte un bâti (B) de forme générale parallélépipèdique, **CARACTERISE PAR LE FAIT QUE** lesdits berceaux (120) sont fixés à une face latérale du bâti (B) de la susdite machine-outil d'usinage (M).

4. Dispositif (D) selon les revendications 1 et 2, **CARACTERISE PAR LE FAIT QUE** lesdits berceaux (120) sont ouverts vers le haut et adoptent la forme d'un arc de cercle dont la bissectrice de l'angle formé par les deux extrémités d'arc et le centre du berceau (120) est inclinée selon un angle α par rapport à l'axe horizontal dudit berceau (120).

5. Dispositif (D) selon les revendications 1 et 2, **CARACTERISE PAR LE FAIT QU'**une partie des berceaux (120) dudit module de stockage (100) est montée mobile et solidaire d'un dispositif d'ouverture de sorte que mise en mouvement, lesdits berceaux mobiles puissent être accessibles de l'extérieur de l'enceinte (110) dudit module de stockage (100) et permettre le chargement ou le déchargement ou bien l'échange des outils (O) de l'extérieur.

6. Dispositif (D) selon les revendications 1 et 2, **CARACTERISE PAR LE FAIT QU'**une partie des berceaux (120) est escamotable en ce que lesdits berceaux sont solidaires d'un boîtier amovible qui se retire et se replace dans l'enceinte dudit module de stockage afin de permettre le chargement ou le déchargement ou bien l'échange des outils (O) de l'extérieur.

7. Dispositif (D) selon la revendication 1, **CARACTERISE PAR LE FAIT QUE** ledit module de manipulation (200) comporte deux bras (210 et 220) qui, munis chacun à son extrémité d'un organe préhenseur (230 et 240) des outils (O), sont disposés l'un au-dessus de l'autre dans un même plan vertical perpendiculaire au susdit plan vertical de stockage des outils (O), lesdits bras (210 et 220) adoptant deux positions, à savoir :
- une première position déployée de chargement ou de déchargement d'outils (O) où l'organe préhenseur (230 ou 240) devient coaxial avec l'axe d'un berceau (120),
- une deuxième position repliée de transport d'outils (O) où l'organe préhenseur (230 ou 240) s'écarte du plan vertical de stockage.

8. Dispositif (D) selon la revendication 7, **CARACTERISE PAR LE FAIT QUE** les deux bras (210 et 220) sont mus simultanément par un seul et même actionneur.

9. Dispositif (D) selon la revendication 7, **CARACTERISE PAR LE FAIT QUE** les deux organes préhenseurs (230 et 240) sont commandés séparément.

10. Dispositif (D) selon les revendications 4 et 8, **CARACTERISE PAR LE FAIT QUE** la course simultanée des deux bras (210 et 220) du susdit module de manipulation (200) est réalisée selon un angle (- α) par rapport à l'horizontale de façon à venir prendre et à déposer les outils (O) dans les berceaux (120).

11. Dispositif (D) selon la revendication 7, **CARACTERISE PAR LE FAIT QUE** ledit module de manipulation (200) comporte un sous-ensemble de mise en mouvement assurant ses déplacements rectilignes dans un plan vertical parallèle au plan de stockage des outils, au moyen d'une structure logique verticale (250) comportant des rails verticaux de guidage (251 et 252) et des rails horizontaux (253 et 254) sur lesquels se déplace le module de manipulation (200).

12. Dispositif (D) selon la revendication 7, **CARACTERISE PAR LE FAIT QUE** les susdits organes préhenseurs (230 et 240) sont en deux parties :
- une partie de serrage proprement dite constituée d'une pince de serrage venant en prise avec l'outil (O),
- et une partie d'indexage assurant le réajustement du positionnement angulaire de l'outil (O) par rapport à son axe de rotation.

13. Dispositif selon la revendication 12, **CARACTERISE PAR LE FAIT QUE** ladite pince de serrage des susdits organes préhenseurs (230 et 240) se compose :
- d'une part, d'une fourchette fixe de positionnement et d'appui de l'outil (O) qui reçoit l'outil (O) entre ses deux branches et,
- d'autre part, d'un moyen de maintien en position mobile qui vient, pour refermer ladite pince de serrage, appuyer axialement sur l'outil (O) de façon à maintenir en position ce dernier sur la fourchette . fixe de positionnement et d'appui.

14. Dispositif (D) selon la revendication 13, **CARACTERISE PAR LE FAIT QUE** la partie d'indexage se compose d'une platine qui, venant se positionner à l'extrémité arrière de l'outil (O) pris dans la pince de serrage de l'organe préhenseur (230 ou 240), comporte des tétons à ressorts s'escamotant sur une partie pleine de l'arrière de l'outil (O) pris dans ladite pince de serrage et se relevant dans une partie évidée.

15. Dispositif (D) selon la revendication 14, **CARACTERISE PAR LE FAIT QUE** la platine de la partie d'indexage est solidaire du moyen de maintien en position mobile et vient assurer le réajustement de la position angulaire de l'outil (O) lors du mouvement de fermeture de ladite pince de serrage.

16. Dispositif (D) selon les revendications 1 et 7, **CARACTERISE PAR LE FAIT QUE** ledit module de transfert (300) comporte deux moyens de préhension (310 et 320) qui, venant en vis-à-vis avec les organes préhenseurs (230 et 240) du susdit module de manipulation (200), dans la zone d'échange avec ce dernier, pour recevoir l'outil (O) à utiliser et rendre l'outil (O) venant d'être utilisé, adopte dans la zone d'échange avec le coulant (C) et dans un plan perpendiculaire à l'axe de rotation des outils (O) au moins une position de façon à recevoir l'outil (O) venant d'être utilisé et présenter l'outil (O) devant être utilisé dans une même position angulaire.

17. Dispositif (D) selon la revendication 14 dans lequel le coulant (C) de la machine-outil d'usinage (M) reste fixe dans le plan de mouvements perpendiculaire à l'axe de rotation des outils (O), **CARACTERISE PAR LE FAIT QU'**un premier moyen de préhension (310) du susdit module de transfert (300) adopte une trajectoire de rotation autour d'un premier point fixe (A) solidaire du bâti (B) et qu'un deuxième moyen de préhension (320) adopte un mouvement qui, commandé par le mouvement tournant du premier moyen de préhension (310) assure un changement de positionnement angulaire dudit deuxième moyen de préhension (320) par rapport au premier (310).

18. Dispositif (D) selon la revendication 15, **CARACTERISE PAR LE FAIT QUE** le mouvement de rotation dudit module de transfert (300) est associé à un mouvement de translation d'un capot de protection (400) séparant la zone d'échange entre le module de manipulation (200) et le module de transfert (300) de la zone d'usinage.

19. Dispositif (D) selon la revendication 16, **CARACTERISE PAR LE FAIT QUE** ledit deuxième moyen de préhension (320) du module de transfert (300) est solidaire d'une platine (321) montée pivotante par rapport au premier moyen de préhension (310), ladite platine (321) étant en liaison glissière avec un corps de glissière (322) monté en pivot autour d'un deuxième point fixe (E) du bâti (B), l'écartement séparant le susdit premier point fixe (A) de pivotement avec le susdit deuxième point fixe (E) de pivotement étant tel que les moyens de préhension (310 et 320) s'orientent angulairement l'un par rapport à l'autre de façon à ce que les deux moyens de préhension (310 et 320) aient la même orientation angulaire en un point commun de leur trajectoire.

20. Procédé de travail d'un dispositif d'emmagasinage et de changement d'outils (D) d'une machine-outil d'usinage à grande vitesse (M) comportant un coulant horizontal (C) recevant à son extrémité un outil (o), du type de celui qui se compose des parties suivantes :
- un module de stockage (100) d'outils (O) comportant, à l'intérieur d'une enceinte fermée (110), une pluralité de logements alignés (120) réceptionnant les outils (O) de façon à ce que les axes de ces derniers soient parallèles à l'axe du coulant (C) et soient éléments d'un même plan vertical de stockage,
- un module de manipulation (200) qui, se déplaçant dans un plan vertical parallèle au plan vertical de stockage des outils (O), assure le chargement ou le déchargement d'au moins un outil (O) d'un logement (120) et son transport dans la susdite enceinte (110). selon une direction parallèle à l'axe du coulant (C), de son logement vers une zone d'échange avec un troisième module (300) et vice-versa, et
- un module de transfert (300) qui, assure le transport de l'outil (O) présent dans le coulant (C) d'une zone d'échange avec le coulant (C) vers la zone d'échange avec le module de manipulation (200) pour le lui transmettre et vice-versa,
ledit module de manipulation (200) comportant deux bras (210 et 220) qui, munis chacun à son extrémité d'un organe préhenseur (230 et 240) des outils (O), sont disposés l'un au-dessus de l'autre dans un même plan vertical perpendiculaire au susdit plan vertical de stockage des outils (O), lesdits bras (210 et 220) adoptant deux positions, à savoir :
- une première position déployée de chargement ou de déchargement d'outils (O) où l'organe préhenseur (230 ou 240) devient coaxial avec l'axe d'un berceau (120),
- une deuxième position repliée de transport d'outils (O) où l'organe préhenseur (230 ou 240) s'écarte du plan vertical de stockage,
ledit module de transfert (300) comportant deux moyens de préhension (310 et 320) qui, venant en vis-à-vis avec les organes préhenseurs (230 et 240) du susdit module de manipulation (200), dans la zone d'échange avec ce dernier, pour recevoir l'outil (O) à utiliser et rendre l'outil (O) venant d'être utilisé, adoptent dans la zone d'échange avec le coulant (C) et dans le plan perpendiculaire à l'axe de rotation des outils (O), au moins une position de façon à recevoir l'outil (O) venant d'être utilisé et présenter l'outil (O) devant être utilisé dans une même position angulaire,
le module de manipulation (200) étant dans sa position de transport et comportant un premier organe préhenseur (230) libre et un deuxième organe préhenseur (240) avec un premier outil (O1),
une opération d'usinage étant en cours au moyen d'un deuxième outil (O2),
le module de transfert (300) étant en vis-à-vis du module de manipulation (200) avec un premier moyen de préhension (310) tenant un troisième outil (O3) en vis-à-vis avec le premier organe préhenseur (230) libre du module de manipulation (200) et avec un deuxième moyen de préhension (320) libre en vis-à-vis avec ledit deuxième organe préhenseur (240) tenant le premier outil (O1), **CARACTERISE EN CE QU'**il consiste à suivre le cycle des étapes suivantes :
- dans un premier temps, le module de manipulation (200) s'éloigne de sa zone d'échange avec le module de transfert (300) afin de déposer dans son berceau (120) de stockage, le premier outil (O1) en réalisant au moyen des bras (210 et 220) un mouvement plongeant en translation vers le module de stockage (100), le premier organe préhenseur (230) restant en position ouverte, le deuxième organe préhenseur (240) tenant le premier outil (O1) s'ouvre de façon à libérer ledit outil (O1) pendant que l'opération d'usinage s'arrête, le module de transfert (300) bascule de sa position en zone d'échange avec le module de manipulation (200) vers une position en zone d'échange avec le coulant (C) provoquant l'escamotage du capot de protection (400), le coulant (C) se dirige vers une position fixe de changement d'outils (O) au niveau de laquelle s'est mis en position, le moyen de préhension (320) libre du module de transfert (300),
- dans un deuxième temps, les deux bras (210 et 220) du module de manipulation (200) sont en position de transport avec leur organe préhenseur respectif (230 et 240) libre, le module de manipulation (200) étant en attente pendant que le coulant (C) s'est placé dans sa position fixe de transfert de façon à ce que le deuxième outil (O2) soit en prise avec le moyen de préhension libre (320) du module de transfert (300) et que par recul du coulant (C) ce dernier se désolidarise dudit deuxième outil (O2),
- dans un troisième temps, le module de manipulation (200) se déplace et déploie ses bras (210 et 220) en commandant à son premier organe préhenseur (230) la prise d'un quatrième outil (O4), le deuxième organe préhenseur (240) restant libre, pendant que le module de transfert (300) bascule pour présenter en position fixe de changement d'outil et selon la bonne orientation angulaire le troisième outil (O3) de façon à ce que par avancée du coulant (C) ce dernier se solidarise au troisième outil (O3),
- dans un quatrième temps, les bras (210 et 220) du module de manipulation (200) reviennent en position de transport de façon à ce que ce dernier amène le quatrième outil (O4) du module de stockage (100) vers la zone d'échange du module de manipulation (200) avec le module de transfert (300) pendant que le coulant (C) dégage le troisième outil (O3) en se déplaçant selon un plan perpendiculaire à l'axe de rotation des outils (O),
- dans un cinquième temps, le module de manipulation (200) est en position transport dans sa zone d'échange avec le module transfert (300) avec le quatrième outil (O4) dans son premier organe préhenseur (230), pendant que le module de transfert (300) bascule de sa zone d'échange avec le coulant (C) vers sa zone d'échange avec le module de manipulation (200) avec le deuxième outil (O2) dans son second moyen de préhension (320) et de façon à ce que les premier (310) et deuxième (320) moyens de préhension du module de transfert (300) viennent en vis-à-vis avec les premier (230) et deuxième (240) organes préhenseurs du module de manipulation (200), le basculement provoquant la remise en place du capot de protection (400), une opération d'usinage démarrant avec le troisième outil (O3),
- dans un sixième temps, le module de manipulation (200) déploie ses bras (210 et 220) de façon à ce que le quatrième outil (O4) présent dans le premier organe préhenseur (230) vienne en prise avec le premier moyen de préhension (310) du module de transfert (300) et que le deuxième outil (O2) en prise dans le deuxième moyen de préhension (320) vienne dans le deuxième organe préhenseur (240) du module de manipulation (200), ce dernier commande alors l'ouverture du premier organe préhenseur (230) et la fermeture du deuxième organe préhenseur (240) de façon à ce que lors du retour en position transport du module de manipulation (200), le deuxième outil (O2) soit présent dans le deuxième organe préhenseur (240) et le quatrième outil (O4) soit en prise avec le premier moyen de préhension (310) du module de transfert (300), pendant qu'une opération d'usinage est en cours avec le troisième outil (O3) reproduisant la situation de départ.

## Patentansprüche

1. Vorrichtung zum Speichern und Wechseln von Werkzeugen (D) eines Hochgeschwindigkeitsbearbeitungszentrums (M) umfassend einen horizontalen Schieber (C) zur endseitigen Aufnahme eines Werkzeugs (O), die aus einem Modul zur Werkzeuglagerung (100) besteht, welches in einem geschlossenen Raum (110) eine Vielzahl fluchtender Aufnahmen (120) umfasst, wobei diese Aufnahmen die Werkzeuge (O) derart aufnehmen, dass deren Achsen parallel zur Achse des Schiebers (C) verlaufen und dass sie einer selben vertikalen Lagerungsebene angehören, **DADURCH GEKENNZEICHNET, DASS** diese Vorrichtung zusätzlich aus den folgenden Teilen besteht:
- einem Handhabungsmodul (200), das zwei Greifer aufweist, die das Beschicken und das Entnehmen wenigstens eines Werkzeugs (O) in bzw. aus einer Aufnahme (120) und seinen Transport in den oben genannten Raum (110) entlang einer parallel zur Achse des Schiebers (C) verlaufenden Richtung von seiner Aufnahme (120) zu einem Bereich, in dem es zum Austausch mit einem dritten Modul (300) kommt und umgekehrt, besorgen und die sich dabei in einer vertikalen Ebene bewegen, die parallel zur vertikalen Lagerungsebene der Werkzeuge (O) verläuft, und
- einem Übergabemodul (300), das zwei Greifmittel aufweist und das das im Schieber (C) befindliche Werkzeug (O) von einem Bereich, in dem es zu einem Austausch mit dem Schieber (C) kommt, zu dem Bereich transportiert, in dem ein Austausch mit dem Handhabungsmodul (200) stattfindet, wo dann das Werkzeug übergeben wird und umgekehrt, wobei im Austauschbereich die beiden Greifmittel des Übergabemoduls gegenüber den Greifern des Handhabungsmoduls zu stehen kommen.

2. Vorrichtung (D) nach Anspruch 1, **DADURCH GEKENNZEICHNET, DASS** die Aufnahmen (120) des oben genannten Lagerungsmoduls (100) jeweils eine Halterung aufweisen, die von einer Seite her zugänglich ist und in der das Werkzeug (O) durch die Schwerkraft gehalten wird.

3. Vorrichtung (D) nach den Ansprüchen 1 und 2, in der das Bearbeitungszentrum (M) ein Gestell (B) umfasst, das insgesamt die Form eines Parallelepipeds aufweist, **DADURCH GEKENNZEICHNET, DASS** die Halterungen (120) an einer Seitenfläche des Gestells (B) des oben genannten Bearbeitungszentrums (M) befestigt sind.

4. Vorrichtung (D) nach den Ansprüchen 1 und 2, **DADURCH GEKENNZEICHNET, DASS** die Halterungen (120) nach oben hin offen sind und kreisbogenförmig ausgebildet sind, wobei die Winkelhalbierende des durch die beiden Enden des Bogens und das Zentrum der Halterung (120) gebildeten Winkels in einem Winkel ? zur Horizontalachse der Halterung (120) geneigt ist.

5. Vorrichtung (D) nach den Ansprüchen 1 und 2, **DADURCH GEKENNZEICHNET, DASS** ein Teil der Halterungen (120) des Lagerungsmoduls (100) beweglich und einstückig mit einer Öffnungsvorrichtung montiert ist, so dass, wenn sie bewegt werden, die beweglichen Halterungen von außerhalb des Raums (110) des Lagerungsmoduls (100) zugänglich sind und das Beschicken oder Entladen oder aber der Austausch der Werkzeuge (O) von außen ermöglicht wird.

6. Vorrichtung (D) nach den Ansprüchen 1 und 2, **DADURCH GEKENNZEICHNET, DASS** ein Teil der Halterungen (120) dadurch einziehbar ist, dass diese Halterungen fest mit einem abnehmbaren Gehäuse verbunden sind, welches sich zurückzieht und sich wieder in den Raum des Lagerungsmoduls einfindet, um das Beschicken oder das Entladen oder aber den Austausch der Werkzeuge (O) von außen zu ermöglichen.

7. Vorrichtung (D) nach Anspruch 1, **DADURCH GEKENNZEICHNET, DASS** das Handhabungsmodul (200) zwei Arme (210 und 220) umfasst, die jeweils endseitig mit einem Greifer (230 und 240) für die Werkzeuge (O) ausgestattet und übereinander in einer selben, senkrecht zur oben genannten vertikalen Lagerungsebene der Werkzeuge (O) verlaufenden vertikalen Ebene angeordnet sind, wobei die Arme (210 und 220) zwei Stellungen einnehmen, nämlich:
- eine erste, ausgestreckte Stellung, in der die Werkzeuge beschickt oder entladen werden und in der der Greifer (230 oder 240) so ausgerichtet wird, dass er koaxial zur Achse der Halterung (120) verläuft,
- eine zweite, zurückgebogene Stellung, in der die Werkzeuge (O) transportiert werden und in der der Greifer (230 oder 240) sich von der vertikalen Lagerungsebene entfernt.

8. Vorrichtung (D) nach Anspruch 7, **DADURCH GEKENNZEICHNET, DASS** die beiden Arme (210 und 220) gleichzeitig durch ein und dasselbe Stellgerät angetrieben werden.

9. Vorrichtung (D) nach Anspruch 7, **DADURCH GEKENNZEICHNET, DASS** die beiden Greifer (230 und 240) getrennt gesteuert werden.

10. Vorrichtung (D) nach den Ansprüchen 4 und 8, **DADURCH GEKENNZEICHNET, DASS** der gleichzeitige Bewegungsablauf der beiden Arme (210 und 220) des oben genannten Handhabungsmoduls (200) in einem Winkel (- ?) zur Horizontalen verläuft, so dass die Werkzeuge (O) aus den Halterungen (120) entnommen und in diese hineingegeben werden.

11. Vorrichtung (D) nach Anspruch 7, **DADURCH GEKENNZEICHNET, DASS** das Handhabungsmodul (200) eine Antriebsuntergruppe umfasst, die dafür sorgt, dass mittels einer logischen vertikalen Struktur (250), welche vertikale Führungsschienen (251 und 252) und horizontale Schienen (253 und 254), auf denen das Handhabungsmodul (200) verschoben wird, umfasst, das Handhabungsmodul geradlinig in einer parallel zur Lagerungsebene der Werkzeuge verlaufenden vertikalen Ebene verschoben wird.

12. Vorrichtung (D) nach Anspruch 7, **DADURCH GEKENNZEICHNET, DASS** die oben genannten Greifer (230 und 240) aus zwei Teilen gebildet sind:
- einem eigentlichen Spannungsteil, das aus einer Spannzange besteht, die das Werkzeug (O) greift,
- und einem Rastteil, das für das Nachstellen der Winkelpositionierung des Werkzeugs (O) im Verhältnis zu seiner Drehachse sorgt.

13. Vorrichtung (D) nach Anspruch 12, **DADURCH GEKENNZEICHNET, DASS** die Spannzange der oben genannten Greifer (230 und 240) folgende Elemente umfasst:
- einerseits eine stationäre Positionier- und Stützgabel des Werkzeugs (O), die das Werkzeug (O) zwischen ihren beiden Zinken aufnimmt, und
- andererseits ein Haltemittel zum Halten des Werkzeugs in einer beweglichen Position, das zum Schließen der Spannzange axialen Druck auf das Werkzeug (O) ausübt, so dass dieses auf der stationären Positionier- und Stützgabel in Position gehalten wird.

14. Vorrichtung (D) nach Anspruch 13, **DADURCH GEKENNZEICHNET, DASS** das Rastteil aus einer Platine besteht, die am hinteren in der Spannzange des Greifers (230 oder 240) eingeklemmten Ende des Werkzeugs (O) positioniert ist und federbelastete Stifte umfasst, die auf einen durchgehenden Teil des hinteren Endes des in der Spannzange eingeklemmten Werkzeugs (O) eingezogen und in einem ausgehöhlten Teil wieder aufgerichtet werden.

15. Vorrichtung (D) nach Anspruch 14, **DADURCH GEKENNZEICHNET, DASS** die Platine des Rastteils einstückig mit dem Haltemittel zum Halten des Werkzeugs in einer beweglichen Position ausgebildet ist und bei der Schließbewegung der Spannzange die Winkelstellung des Werkzeugs (O) nachstellt.

16. Vorrichtung (D) nach den Ansprüchen 1 und 7, **DADURCH GEKENNZEICHNET, DASS** das Übergabemodul (300) zwei Greifmittel (310 und 320) umfasst, die in dem Bereich, in dem es zu einem Austausch mit dem oben genannten Handhabungsmodul (200) kommt, gegenüber den Greifern (230 und 240) desselben zu stehen kommen, um das zu verwendende Werkzeug (O) in Empfang zu nehmen und das soeben verwendete Werkzeug (O) zurückzugeben, und die in dem Bereich, in dem es zu einem Austausch mit dem Schieber (C) kommt, und in einer senkrecht zur Drehachse der Werkzeuge (O) verlaufenden Ebene mindestens eine Stellung einnehmen, die es ihnen erlaubt, das soeben benutzte Werkzeug (O) und das zur Verwendung anstehende Werkzeug (O) in ein und derselben Winkelstellung aufzunehmen bzw. anzubieten.

17. Vorrichtung (D) nach Anspruch 14, in der der Schieber (C) des Bearbeitungszentrums (M) in der senkrecht zur Drehachse der Werkzeuge (O) verlaufenden Bewegungsebene stationär bleibt, **DADURCH GEKENNZEICHNET, DASS** ein erstes Greifmittel (310) des oben genannten Übergabemoduls (300) um einen ersten festen, in dem Gestell (B) integrierten Punkt (A) dreht, und das zweite Greifmittel (320) eine durch die Drehbewegung des ersten Greifmittels (310) gesteuerte Bewegung ausführt, die dafür sorgt, dass es zu einer Änderung der Winkelpositionierung des zweiten Greifmittels (320) im Verhältnis zum ersten (310) kommt.

18. Vorrichtung (D) nach Anspruch 15, **DADURCH GEKENNZEICHNET, DASS** die Drehbewegung des Übergabemoduls (300) an eine Translationsbewegung einer Schutzkappe (400) gekoppelt ist, welche den Austauschbereich zwischen Handhabungsmodul (200) und Übergabemodul (300) von dem Bearbeitungsbereich trennt.

19. Vorrichtung (D) nach Anspruch 16, **DADURCH GEKENNZEICHNET, DASS** das zweite Greifmittel (320) des Übergabemoduls (300) einstückig mit einer im Verhältnis zum ersten Greifmittel (310) schwenkbar gelagerten Platine (321) ausgebildet ist, wobei die Platine (321) in Gleitverbindung mit einem um einen zweiten festen Punkt (E) des Gestells (B) schwenkbar gelagerten Gleitschienenkörper (322) steht, wobei der Abstand zwischen dem ersten festen Schwenkpunkt (A) und dem zweiten festen Schwenkpunkt (E) derart ist, dass die Greifmittel (310 und 320) in einem solchen Winkel zueinander stehen, dass die beiden Greifmittel (310 und 320) in einem gemeinsamen Punkt ihrer Laufbahn die gleiche Winkelausrichtung haben.

20. Arbeitsverfahren einer Vorrichtung zum Speichern und Wechseln von Werkzeugen (D) eines Hochgeschwindigkeitsbearbeitungszentrums (M) umfassend einen horizontalen Schieber (C) zur endseitigen Aufnahme eines Werkzeugs (O), die aus folgenden Teilen besteht:
- einem Modul zur Lagerung (100) von Werkzeugen (O), das in einem geschlossenen Raum (110) eine Vielzahl fluchtender Aufnahmen (120) umfasst, wobei diese Aufnahmen die Werkzeuge (O) derart aufnehmen, dass deren Achsen parallel zur Achse des Schiebers (C) verlaufen und dass sie einer selben vertikalen Lagerungsebene angehören,
- einem Handhabungsmodul (200), das das Beschicken oder das Entnehmen wenigstens eines Werkzeugs (O) in bzw. aus einer Aufnahme (120) und seinen Transport in den oben genannten Raum (110) entlang einer parallel zur Achse des Schiebers (C) verlaufenden Richtung von seiner Aufnahme (120) zu einem Bereich, in dem es zum Austausch mit einem dritten Modul (300) kommt und umgekehrt, besorgt und sich dabei in einer parallel zur vertikalen Lagerungsebene der Werkzeuge (O) verlaufenden vertikalen Ebene bewegt, und
- einem Übergabemodul (300), das das im Schieber (C) befindliche Werkzeug (O) von einem Bereich, in dem es zu einem Austausch mit dem Schieber (C) kommt, zu dem Bereich transportiert, in dem ein Austausch mit dem Handhabungsmodul (200) stattfindet, wo dann das Werkzeug übergeben wird und umgekehrt,
wobei das Handhabungsmodul (200) zwei Arme (210 und 220) umfasst, die jeweils endseitig mit einem Greifer (230 und 240) für die Werkzeuge (O) ausgestattet sind und übereinander in einer selben senkrecht zur oben genannten vertikalen Lagerungsebene der Werkzeuge (O) verlaufenden vertikalen Ebene angeordnet sind, wobei die Arme (210 und 220) zwei Stellungen einnehmen, nämlich:
- eine erste, ausgestreckte Stellung, in der die Werkzeuge beschickt oder entladen werden und in der der Greifer (230 oder 240) so ausgerichtet wird, dass er koaxial zur Achse der Halterung (120) verläuft,
- eine zweite, zurückgebogene Stellung, in der die Werkzeuge (O) transportiert werden und in der der Greifer (230 oder 240) sich von der vertikalen Lagerungsebene entfernt,
wobei das Übergabemodul (300) zwei Greifmittel (310 und 320) umfasst, die in dem Bereich, in dem es zu einem Austausch mit dem oben genannten Handhabungsmodul (200) kommt, gegenüber den Greifern (230 und 240) desselben zu stehen kommen, um das zu verwendende Werkzeug (O) in Empfang zu nehmen und das soeben verwendete Werkzeug (O) zurückzugeben, und die in dem Bereich, in dem es zu einem Austausch mit dem Schieber (C) kommt, und in einer senkrecht zur Drehachse der Werkzeuge (O) verlaufenden Ebene mindestens eine Stellung einnehmen, die es ihnen erlaubt, das soeben benutzte Werkzeug (O) und das zur Verwendung anstehende Werkzeug (O) in ein und derselben Winkelstellung aufzunehmen bzw. anzubieten,
wobei das Handhabungsmodul (200) sich in seiner Transportposition befindet und einen ersten freien Greifer (230) und einen zweiten, ein erstes Werkzeug (O1) haltenden Greifer (240) umfasst,
wobei ein Bearbeitungsvorgang mit einem zweiten Werkzeug (02) stattfindet,
wobei das Übergabemodul (300) dem Handhabungsmodul (200) gegenübersteht, und sein erstes Greifmittel (310) ein drittes Werkzeug (03) festhält und sich dabei gegenüber dem ersten freien Greifer (230) des Handhabungsmoduls (200) befindet, und sein zweites, freies Greifmittel (320) dem zweiten, das erste Werkzeug (O1) haltenden Greifer (240) gegenübersteht, **DADURCH GEKENNZEICHNET, DASS** das Verfahren darin besteht, die folgenden Schritte zu befolgen:
- in einem ersten Schritt entfernt sich das Handhabungsmodul (200) von seinem Austauschbereich mit dem Übergabemodul (300), um in seine Lagerhalterung (120) das erste Werkzeug (O1) einzulegen, wobei es hierzu mit seinen Armen eine nach unten führende Translationsbewegung zum Lagerungsmodul (100) hin beschreibt, wobei der erste Greifer (230) dabei offen bleibt, der zweite, das erste Werkzeug (O1) haltende Greifer (240) sich zur Freigabe des Werkzeugs (O1) öffnet, während der Bearbeitungsvorgang zum Stillstand kommt, das Übergabemodul (300) schwenkt von seiner Stellung in dem Bereich, in dem es zum Austausch mit dem Handhabungsmodul (200) kommt, in eine Stellung in dem Bereich, in dem ein Austausch mit dem Schieber (C) stattfindet, wodurch die Schutzkappe (400) eingezogen wird, der Schieber (C) bewegt sich auf eine stationäre Position zu, in der die Werkzeuge (O) gewechselt werden, und auf deren Höhe das freie Greifmittel (320) des Übergabemoduls (300) zu stehen kommt,
- in einem zweiten Schritt befinden sich die beiden Arme (210 und 220) des Handhabungsmoduls (200) mit ihrem jeweiligen freien Greifer (230 und 240) in Transportstellung, wobei das Handhabungsmodul (200) in Wartestellung ist, während der Schieber (C) seine feste Übergabeposition derart eingenommen hat, dass das zweite Werkzeug (02) mit dem freien Greifmittel (320) des Übergabemoduls (300) in Eingriff steht und dass, durch Rückzug des Schiebers (C), dieser das zweite Werkzeug (O2) freigibt,
- in einem dritten Schritt verschiebt sich das Handhabungsmodul (200) und streckt seine Arme (210 und 220) aus, wobei es seinen ersten Greifer (230) zum Greifen eines vierten Werkzeugs (O4) antreibt und der zweite Greifer (240) frei bleibt, während das Übergabemodul (300) geschwenkt wird, um in seiner festen Position des Werkzeugwechsels und in der geeigneten Winkelausrichtung das dritte Werkzeug (O3) derart anzubieten, dass durch das Vorschieben des Schiebers (C) dieser mit dem dritten Werkzeug (O3) fest verbunden wird,
- in einem vierten Schritt nehmen die Arme (210 und 220) des Handhabungsmoduls (200) wieder die Transportstellung ein, so dass dieses das vierte Werkzeug (O4) vom Lagerungsmodul (100) zu dem Bereich bringt, in dem ein Austausch zwischen dem Handhabungsmodul (200) und dem Übergabemodul (300) stattfindet, während der Schieber (C) das dritte Werkzeug (O3) dadurch freigibt, dass er sich in einer senkrecht zur Rotationsachse der Werkzeuge (O) verlaufenden Ebene verschiebt,
- in einem fünften Schritt ist das Handhabungsmodul (200) in dem Bereich, in dem es zu einem Austausch mit dem Übergabemodul (300), das in seinem ersten Greifer (230) das vierte Werkzeug (O4) hält, kommt, in der Transportstellung, während das Übergabemodul (300) von seinem Bereich, in dem es einen Austausch mit dem Schieber (C) vornimmt, in den Bereich schwenkt, in dem ein Austausch mit dem mit seinem zweiten Greifmittel (320) das zweite Werkzeug (02) haltenden Handhabungsmodul (200) stattfindet, wobei dieses Schwenken derart erfolgt, dass die ersten (310) und zweiten (320) Greifmittel des Übergabemoduls (300) gegenüber den ersten (230) und zweiten (240) Greifern des Handhabungsmoduls (200) zu stehen kommen und dass die Schutzkappe (400) wieder ihren Platz einnimmt, woraufhin ein Bearbeitungsvorgang mit dem dritten Werkzeug (03) gestartet wird,
- in einem sechsten Schritt streckt das Handhabungsmodul (200) seine Arme (210 und 220) derart aus, dass das im ersten Greifer (230) gehaltene Werkzeug (O4) mit dem ersten Greifmittel (310) des Übergabemoduls (300) in Eingriff kommt und dass das im zweiten Greifmittel (240) gehaltene zweite Werkzeug (O2) in den zweiten Greifer (240) des Handhabungsmoduls (200) gebracht wird, woraufhin dieses dann die Öffnung des ersten Greifers (230) und das Schließen des zweiten Greifers (240) derart steuert, dass bei Rückkehr des Handhabungsmoduls (200) in die Transportstellung das zweite Werkzeug (O2) sich in dem zweiten Greifer (240) befindet und das vierte Werkzeug (O4) mit dem ersten Greifmittel (310) des Übergabemoduls (300) in Eingriff ist, wobei währenddessen ein Bearbeitungsvorgang mit dem dritten Werkzeug (O3) stattfindet, der die Anfangssituation wiederholt.

## Claims

1. Tool storage and tool exchange device (D) of a high speed machining machine-tool (M) comprising a horizontal ram (C) receiving a tool (O) on its end, of the type including a tool storage module (100) comprising, inside a sealed chamber (100), a multiplicity of aligned housings (120) receiving the tools (O) so that the axes of those tools are parallel with the axis of the ram (C) and form part of a same vertical storage plane, WHEREIN it includes moreover the following parts :
- a handling module (200) fitted with two gripping mechanisms which, moving in a vertical plane parallel with the tool storage vertical plane, ensures loading or unloading of at least one tool (O) in a housing (120) and its transport in the aforesaid chamber (110), along a direction parallel with the axis of the ram (C), from its housing towards an exchange zone with a third module (300) and vice-versa, and
- a transfer module (300) fitted with two gripping means ensuring transport of the tool (O) present in the ram (C) from an exchange zone with the ram (C) towards the exchange zone with the handling module (200) to transmit the tool to it, and vice-versa,
the two gripping means of the tranfer module (300) coming to face with the gripping mechanisms of the handling module (200) in the exchange zone.

2. Device (D) according to claim 1, WHEREIN the said housings (120) of the aforesaid storage module (100) are each constituted by a cradle which, accessible on one side, holds tool (O) by gravity.

3. Device (D) according to claims 1 and 2, in which the machining machine-tool (M) comprises a frame (B) of mainly parallelepiped shape, WHEREIN the said cradles (120) are fixed to a lateral side of the frame (B) of the aforesaid machining machine-tool (M).

4. Device (D) according to claims 1 and 2, WHEREIN the said cradles (120) are open on their top and take the shape of an arc of a circle of which the bisecting line of the angle formed by both ends of the arc and the center of the cradle (120) is tilted along an angle α in relation to the horizontal axis of the said cradle (120).

5. Device (D) according to claims 1 and 2, WHEREIN one part of the cradles (120) of the said storage module (100) being mounted moveable and integral with an opening device so that, when set in motion the said moveable cradles can be accessible from the outside of the chamber (110) of the said storage module (100) and can allow either loading, unloading or the exchange of the tools (O) from outside.

6. Device (D) according to claims 1 and 2, WHEREIN a part of the cradles (120) is detachable in that the said cradles are integral with a removable case which can move back and forth in the chamber of the said storage module so as to allow either loading, unloading or exchange of tools (O) from the outside.

7. Device (D) according to claim 1, WHEREIN the said handling module (200) comprises two arms (210 and 220) which are each fitted at their ends with a tool gripping mechanism (230 and 240) and which are arranged one on top of the other in a same vertical plane perpendicular to the aforesaid vertical plane of the tool storage, these arms (210 and 220) take two positions, i.e. :
- a first extended position of loading and unloading tools (O) when the gripping mechanism (230 or 240) comes in line with the axis of a cradle (120),
- a second folded position of tool transport when the gripping mechanism (230 or 240) moves away from the vertical plane of storage.

8. Device (D) according to claim 7, WHEREIN the two arms (210 and 220) are moved simultaneously by a one and same actuator.

9. Device (D) according to claim 7, WHEREIN both gripping mechanisms (230 and 240) are controlled separately.

10. Device (D) according to claims 4 and 8, WHEREIN the simultaneous travel of both arms (210 and 220) of the aforesaid handling module (200) is achieved along an angle (- α) in relation to the horizontal so that it can come to take and to drop the tools (O) in the cradles (120).

11. Device (D) according to claim 7, WHEREIN the said handling module (200) comprises a subset of setting in motion ensuring movements in a straight line in a vertical plane parallel with the tool storage plane, by means of a vertical logical structure (250) comprising vertical guide rails (251 and 252) and horizontal rails (253 and 254) on which the handling module (200) moves.

12. Device (D) according to claim 7, WHEREIN the aforesaid gripping mechanisms (230 and 240) are in two parts :
- an actual clamping part constituted by a clamping device coming to clamp the tool (O),
- and an indexing part ensuring the straightening of the angular positioning of the tool (O) in relation to its rotation axis.

13. Device (D) according to claim 12, WHEREIN the said clamping device of the aforesaid gripping mechanisms (230 and 240) is made up of :
- on one hand, a fixed tool (O) positioning and resting fork which receives the tool (O) between both its branches and,
- on the other hand, a means of keeping it in a mobile position which in order, to close the said clamping device, comes to rest axially on the tool (O) so as to keep this one in position on the fixed tool positioning and resting fork.

14. Device (D) according to claim 13, WHEREIN the indexing part, comprises a plate which, coming into position at the rear end of the tool (O) engaged in the clamping device of the gripping mechanism (230 or 240), comprises lugs on springs retracting on a filled part of the rear of the tool (O) engaged in the said clamping device and rising on its hollow part.

15. Device (D) according to claim 14, WHEREIN the plate of the indexing part is integral with the means to keep in mobile position and ensures the straightening of the angular position of the tool (O) during the closing movement of the said clamping device.

16. Device (D) according to claims 1 and 7, WHEREIN the said transfer module (300) comprises two gripping means (310 and 320) which, coming to face the gripping mechanisms (230 and 240) of the aforesaid handling module (200), in the exchange zone of the latter, to receive the tool (O) to be used and give back the tool (O) having just been used, takes up, in the exchange zone with the ram (C) and in a perpendicular plane with the rotation axis of the tools (O), at least one position so as to receive the tool (O) having just been used and present the tool (O) to be used in a same angular position.

17. Device (D)according to claim 14, in which the ram (C) of the machining machine-tool (M) stays fixed in the movements plane perpendicular with the axis of rotation of the tools (O) WHEREIN a first gripping means (310) of the aforesaid transfer module (300) adopts a rotation path about a first fixed point (A) integral with the frame (B) and a second gripping means (320) takes up a movement which, controlled by the revolving movement of the first gripping means (310) ensures a change of angular positioning of the said second gripping means (320) in relation to the first one (310).

18. Device (D) according to claim 15, WHEREIN the rotation movement of the said transfer module (300) is combined with a translatory movement of a protection hood (400) separating the exchange zone between the handling module (200) and the transfer module (300) of the machining zone.

19. Device (D) according to claim 16, WHEREIN the said second gripping means (320) of the transfer module (300) is integral with a plate (321) pivotally mounted in relation to the first gripping means (310), the said plate (321) being slidingly connected with a slide bar (322) pivotally mounted about a second fixed point (E) of the frame (B), the separation between the aforesaid pivoting first fixed point (A) and the aforesaid pivoting second fixed point (E) being such that the gripping means (310 and 320) are angularly oriented one in relation to the other so that both gripping means (310 and 320) keep the same angular orientation on a common point in their path.

20. Operating process of a tool storage and tool exchange device (D) of a high speed machining machine-tool (M) comprising a horizontal ram (C) receiving a tool (O) on its end, of the type comprising the following parts :
- a tool storage module (100) comprising, inside a sealed chamber (110), a multiplicity of aligned housings (120) receiving the tools (O) so that the axes of those tools (O) are parallel with the axis of the ram (C) and form part of a same vertical storage plane,
- a handling module (200) which, moving in a vertical plane parallel with the tool storage vertical plane, ensures loading or unloading of at least one tool (O) in a housing (120) and its transport in the aforesaid chamber (110), along a direction parallel with the axis of the ram (C), from its housing towards an exchange zone with a third module (300) and vice-versa, and
- a transfer module (300) ensuring transport of the tool (O) present in the ram (C) from an exchange zone with the ram (C) towards the exchange zone with the handling module (200) to transmit the tool (O) to it, and vice-versa,
the said handling module (200) comprising two arms (210 and 220) which are each fitted at their ends with a tool gripping mechanism (230 and 240), and which are arranged one on top of the other in a same vertical plane perpendicular to the aforesaid vertical plane of the tool storage, these arms (210 and 220) take two positions, i.e.
- a first extended position of loading and unloading tools (O) when the gripping mechanism (230 or 240) comes in line with the axis of the cradle (120),
- a second folded position of tool transport when the gripping mechanism (230 or 240) moves away from the vertical plane of storage,
the said transfer module (300) comprises two gripping means (310 and 320) which, coming to face the gripping mechanisms (230 and 240) of the aforesaid handling module (200), in the exchange zone of the latter, to receive the tool (O) to be used and give back the tool (O) having just been used, take up in the exchange zone with the ram (C) and in the plane perpendicular with the rotation axis of the tools (O), at least one position so as to receive the tool (O) having just been used and present the tool (O) to be used in a same angular position,
the handling module (200) being in its transport position and comprises a first free gripping mechanism (230) and a second gripping mechanism (240) with a first tool (O1),
a machining function taking place by means of a second tool (O2),
the transfer module (300) facing the handling module (200) with a first gripping means (310) holding a third tool (O3) facing the first free gripping mechanism (230) of the handling module (200) and with a second free gripping means (320) facing the said second gripping mechanism (240) holding the first tool (O1), WHEREIN it consist of following the stages cycle described herebelow :
- firstly, the handling module (200) moves away from the exchange zone with the transfer module (300) so as to put in its storage cradle (120) the first tool (O1), executing by means of the arms (210 and 220) a tilting movement translatory towards the storage module (100), the first gripping mechanism (230) staying in open position, the second gripping mechanism (240) holding the first tool (O1) extends so as to free the said tool (O) while the machining is stopped, the transfer module (300) tilts from its position in the exchange zone with the handling module (200) to a position in the exchange zone with the ram (C) causing the protection hood (400) to retract, the ram (C) moves towards a fixed position for tool exchange at the level of which the free gripping means (320) of the transfer module (300) has taken position,
- secondly, the two arms (310 and 220) of the handling module (200) are in transport position with their respective gripping mechanism (230 and 240) free, the handling module (200) being on standby while the ram (C) has taken its fixed tranfer position so that the second tool (O2) is engaged with the free gripping means (320) of the transfer module (300) and with the ram (C) reversing, the said ram breaks away from the said second tool (O2),
- thirdly, the handling module (200) moves and extends its arms (210 and 220) while controlling its first gripping mechanism (230) to make it engage with a fourth tool (O4), the second gripping mechanism (240) staying free, while the transfer module (300) tilts to present, in fixed tool exchange position and according to the right angular position, the third tool (O3) so that with the ram (C) moving forward it comes integral with the third tool (O3),
- fourthly, the arms (310 and 220) of the handling module (200) come back in transport position so that the said handling module (200) brings the fourth tool (O4) of the storage module (100) towards the exchange zone of the handling module (200) with the transfer module (300) while the ram (C) frees the third tool (O3) by moving along a plane perpendicular to the rotation axis of the tools (O),
- fifthly, the handling module (200) is in transport position in its exchange zone with the transfer module (300) with the fourth tool (O4) in its first gripping mechanism (230), while the transfer module (300) tilts from its exchange zone with the ram (C) towards its exchange zone with the handling module (200) with the second tool (O2) in its second gripping means (320) and so that the first and the second gripping means (310 and 320) of the transfer module (300) face the first and the second gripping mechanisms (230 and 240) of the handling module (200), the tilting causing the protection hood (400) to fit back in place, a machining function starting with the third tool (O3),
- sixthly, the handling module (200) extends its arms (210 and 220) so that the fourth tool (O4) present in the first gripping mechanism (230) comes engaged with the first gripping means (310) of the transfer module (300) and that the second tool (O2) engaged in the second gripping means (320) enters in the second gripping mechanism (240) of the handling module (200), the latter then controls the opening of the first gripping mechanism (230) and the closing of the second gripping mechanism (240) so that when the handling module (200) goes back in its transport position, the second tool (O2) is present in the second gripping mechanism (240) and the fourth tool (O4) is engaged with the first gripping means (310) of the transfer module (300), while a machining function is taking place with the third tool (O3) reproducing the initial situation.
